# EUROPEAN PATENT APPLICATION

(11) **EP 3 647 769 A1**
(43) Date of publication of application: **06.05.2020**
(21) Application number: 18203169.0
(22) Date of filing: 29.10.2018
(51) Int. Cl.: G01N 21/05, G01N 21/65, G01N 21/03, G01N 21/85, G01N 21/84

(54) **FLOW CELL**

(71) Applicant: ETH Zurich, 8092 Zürich (CH)
(72) Inventor: Morbidelli, Massimo, 8092 Zürich (CH); Feidl, Fabian, 8092 Zürich (CH); Butté, Alessandro, 8092 Zürich (CH)
(74) Representative: Rey, Antje Gabriele

(57) **Abstract**

A device (100) comprising a channel module (1), an adapter module (2), a reflector module (3), and an optical module (4). The channel module (1) comprises a cylindrical channel (10) which provides an optical path between a first (130) and a second end (140) of the channel module (1), and which provides a fluid connection between an inlet connection (11) and an outlet connection (12). The adapter module (2) comprises an adapter (20) connectable to an optical system (20a) to send optical signals trough the optical path of the channel module (1) to the reflector module (3) and to receive optical signals reflectable by the reflector module (3) through the optical path of the channel module (1). The optical module (4) is arranged between the adapter module (2) and the channel module (1) for modifying said optical signals. The reflector module (3) comprises a reflector (30) by means of which optical signals received from the adapter module (2) are reflectable and returnable to the adapter module (2) through the optical path of the channel module (1).

## Description

### Technical Field

The present invention relates to a device, in particular a Raman analysing system, a set for forming the device, a channel module configured to being used in the device, a method for analysing a liquid mixture, and a use of the device.

### Background Art

Molecular spectroscopy is an analytical technique used to provide structural information about the measured molecules by studying the interaction between matter and electromagnetic radiation.

Raman spectroscopy in particular is used to provide information on molecular vibrations and crystal structures. For bioprocesses, Raman spectroscopy has strong benefits compared to other spectroscopy measurement methods. In particular, Raman spectroscopy provides information about secondary protein structures in aqueous solutions, without significantly interfering with the aqueous solution itself. Therefore, Raman spectroscopy allows in particular to access information about the concentration of a specific molecule, e.g. protein, glucose, amino acids or about its critical quality attributes (e.g. aggregates, fragments, host cell proteins, DNA of the respective molecule) .

Berry (Berry B. et al., Biotechnol. Prog. 2016, Vol 32, No. 1, p. 224 - 234) describes tools and methods for analysing such specific molecules, in particular proteins, in cell cultures. Bioreactors comprise a huge volume of liquid sample, which is static. Therefore, immersion probes (measurement probes, which are in the tanks) are applied for performing analytical measurements.

In contrast, in chromatography, the sample liquids, and the sample volumes are very small. Therefore, it is advantageous to examine a larger volume to achieve reliable measurement results.

To examine larger volumes, so called flow cells are used that enable the measurement of specific molecules within a liquid flow. EP 0 266 769 B1 shows an example of such a flow cell that is applied for chromatographic measurements.

However, current state of the art devices have several disadvantages that will be discussed in the following:
In regard of examining bioprocesses, it is in particular interesting to monitor the individual process steps if the process is ongoing and to collect the data meanwhile. However, monitoring multiple steps of such a bioprocess setup would require to implement multiple Raman detectors within one process setup. Such an implementation is not realistic in view of the expensive infrastructure that would be required.

Raman spectroscopy measurements generate very weak signals only. To increase the signal to noise ratio of a Raman spectroscopy measurement, the exposure time can be adjusted accordingly, in particular it can be extended to collect more signals at the detector. However, for collecting measurement data in an ongoing process, e.g. in a bioprocess setup, fast response times are required for controlling the process. Therefore, adjustment of the exposure time might not be conducive to enhance the signal strength for collecting data in such processes.

Furthermore, death zones and turbulent flows in current flow cells might interfere with the measurement results.

In addition, the exposure of a measurement setup to multiple different samples leads to the contamination of the same. However, since the individual components of a sampling setup are quite expensive, the individual components of the setup require time consuming cleaning.

In addition, for every measurement of a liquid sample, it is required to provide a novel flow cell to avoid contamination of previous measurements and in particular the whole bioprocess.

### Disclosure of the Invention

The problem to be solved by the present invention is therefore to provide a device, in particular for a Raman analysing system, that overcomes the disadvantages of the prior art.

This problem is solved by the subjects of the independent claims. Accordingly, a first aspect of the invention concerns a device, in particular a Raman analysing system comprising a channel module, an adapter module, a reflector module, and an optical module.

The at least one channel module comprises a cylindrical channel which provides an optical path between a first end of the channel module and a second end of the channel module, and which provides a fluid connection between an inlet connection and an outlet connection.

The adapter module comprises an adapter connectable to an optical system to send optical signals through the optical path of the channel module to the reflector module and to receive optical signals reflectable, respectively reflected, by the reflector module through the optical path of the channel module.

The reflector module comprises a reflector by means of which optical signals received from the adapter module are reflectable, respectively reflected, and returnable, respectively returned, to the adapter module through the optical path of the channel module.

Reflecting the optical signal with a reflector allows a very compact construction of the device. Such compact device enables in particular the switching of the optical system between different devices by means of the adapter. Therefore, e.g. a bioprocess can be monitored at different spots in its process line by integrating multiple devices into the line, wherein only one optical system is required which can be switched between the individual devices.

The optical system comprises advantageously a Raman spectroscopy tool and a Raman detector for detecting the reflected optical signals. In particular, the detector detects scattered optical signals that interfere with molecules in a liquid solution of a measurement sample.

In an advantageous embodiment of the invention, the adapter module and/or the optical module are detachably mounted to the first end of the channel module. Advantageously, the reflector module is in addition detachably mounted to the second end of the channel module.

By enabling the exchange of the individual components independently of each other, contaminated or broken modules can exchanged very easily. In particular, the channel of the channel module might be contaminated after receiving a liquid sample and can be exchanged easily by a clean or new one, instead of requiring time-consuming cleaning.

An advantageous embodiment of the invention has a channel with a diameter D of D ≤ 5 mm, advantageously of D ≤ 4 mm, advantageously of D ≤ 3 mm.

In a further advantageous embodiment of the device, the length (L) of the channel from the first end to the second end is within a range of 0.5 ≤ L ≤ 5 cm, advantageously of 0.5 ≤ L ≤ 3 cm, advantageously of 0.5 ≤ L ≤ 1 cm.

In an advantageous device, the liquid is flowing through the device during the measurement from the inlet to the outlet connection that are both connected to an outer liquid source respectively drain.

In a further advantageous device, the channel is filled with the sample liquid and the inlet and outlet connections are disconnected from an outer liquid source, such that the liquid is statically kept within the channel.

However, adjusting the length of the channel leads to variations of the time period during which the liquid sample is exposed to the spectroscopic measurement in both arrangements.

Therefore, adjusting the length of the channel leads to adjustment of the signal enhancement. For example, by enlarging the channel, the exposure time of the liquid sample is extended and therefore leads to a signal enhancement.

If Raman chromatographic processes are performed, big dead volumes in a sample setup might distort the spectroscopic measurements. Therefore, the channel module is required to be designed in a way to minimize the formation of dead volumes, dead zones or turbulent flows.

Advantageously, the inlet connection and the outlet connection of the device are arranged on opposite sides of the channel. Advantageously, they inlet and/or outlet connection direct radially towards the channel. In particular, an axis of the inlet and/or outlet connection directs towards an axis of the channel.

In an advantageous channel module, at least a section of the inlet connection and/or the outlet connection is configured to provide a flow direction opposite to the flow direction of the channel. Such arrangement prevents the forming of dead ends or bubbles in the channel.

Advantageously, the device comprises a first slide that is removably attached to the first end of the channel module and a second slide removably attached to the second end of the channel module. In particular, the first slide and/or the second slide is a glass slide. Each slide is at least partially permeable for the optical signal. Such advantageous slides serve for the purpose of fluidically closing the channel at the respective ends.

Fluidically closing the channels means in particular that no liquid can leave the channel at the slide - channel interface. To further prevent any liquid leaking from the channel at the position of the first or second slide, a sealing mechanism, in particular a sealing ring or sealing paste, could be arranged between the respective glass slide and the channel module. An advantageous sealing ring for such a sealing mechanism absorbs pressures p with p ≥ 10bar.

Being removably attached means in particular that the respective glass slide can be fixed to the respective end by means of a detachable connection, for example a connection with screws, clamps, interlocking structures, magnets, etc. The advantage of a removably attached glass slide is that it can be detached for cleaning and therefore can be reused for different channel modules.

The first and/or the second glass slide advantageously comprise sapphire glass.

In an advantageous embodiment of the invention, the inlet connection comprises an inlet channel that is partially separated by a first wall from the channel. To provide a connection between the inlet channel and the channel, an opening forms between the first wall and the first glass slide. This opening can e.g. have the form of a slit or a half circle. By such a connection between the inlet channel and the channel, a fluid connection is provided between the two.

In addition, the outlet connection advantageously also comprises an outlet channel that is separated by a second wall from the channel. To provide a connection between the outlet channel and the channel, an opening forms between the second wall and the second glass slide. This opening can e.g. have the form of a slit or a half circle. By such a connection between the outlet channel and the channel, a fluid connection is provided between the two.

In particular, the axis of at least a section of the inlet channel and/or an axis of at least a section of the outlet channel are parallel to the axis of the channel. Such section of the inlet and/or outlet channel might be a section of 1/4 or 1/3 or 1/2 of the respective inlet or outlet channel length.

In particular, the section of the inlet and/or outlet channel that is parallel to the axis of the channel might be aligned rectangular to the surface of the respective first or second glass slide.

In addition, a section of the inlet and/or outlet channel of the respective inlet or outlet connection comprises a further section that is built to receive an adapter for receiving the liquid respectively for draining the liquid. In an advantageous embodiment of the invention, the first and/or second wall might comprise rounded or oval-shaped edges to prevent fouling, death zones, and turbulent flows.

In a further advantageous embodiment of the invention, the inlet connection and the outlet connection are formed by cylindrical-shaped adapter connection.

Such adapter might be designed as a thread in the respective inlet or outlet connection, in particular in the respective inlet or outlet channel.

In an advantageous embodiment, an angle between the axis of the inlet channel and/or the axis of the outlet channel and the axis of the channel is within a range of 20° to 60°.

In a further advantageous embodiment, an angle between the inlet and/or outlet adapter connection is within a range of 20° to 60°.

In a further advantageous embodiment, the inlet connection and the outlet connection are arranged on opposite sides of the channel, in particular in such a manner that an angle between an axis of the inlet connection and an axis of the outlet connection seen in a longitudinal direction of the channel is 180°.

In a further advantageous embodiment, the inlet connection is arranged next to the first end of the channel module and the outlet connection is arranged next to the second end of the channel module, in particular wherein a shortest distance between an axis of the respective connection and the first or second end is 1 ≤ 2 mm, in particular 1 ≤ 1mm.

In an advantageous embodiment, the channel might be coated with a reflective material. Furthermore, the reflector might be coated with such a material as well. In particular, such a material might be a metal coating. Such coating might not be limited to the channel and the reflector but might be applied to further parts of the device like the adapter module and/or the optical module to allow optimal reflection of the optical signal.

In addition, coating of the respective parts like channel or reflector does not only refer to fully coated parts but also comprises only partially coated parts, e.g. only a partially coated channel or reflector. By such partial coating, the reflection of the channel walls or reflector walls might be optimized.

Advantageously, the reflector module is built such that the reflector comprises a concave shaped mirror. Such concave shaped mirror might also be a parabolic mirror.

Advantageously, the device comprises in addition a counter mirror for the concave mirror shaped reflector. The concave shaped mirror has a diameter (d1) that is larger than the diameter (D) of the cylindrical channel (d1 > D). In particular is d1 > 2*D or is d1 > 3*D. The concave shaped and the counter mirror are advantageously formed and arranged relatively to each other in a manner that every light beam entering the reflector module is reflected by the concave shaped mirror, in such a way, that the light beam hits the counter mirror vertically to its surface. By such an arrangement of the reflector, the light entering the reflector is reflected in a way that it leaves the reflector in the same angle as it entered. By such an arrangement of the counter mirror and the concave mirror shaped reflector, a maximum reflection of light, in particular up to 100% reflection, is achieved. Scattered and unscattered light is reflected. Such setting of the counter mirror and the concave mirror shaped reflector is in particular advantageous for fabrication of the reflector. Since such an arrangement of counter mirror and concave mirror shaped reflector does not require that the diameter d1 of the concave mirror shaped reflector is of the small diameter D of the cylindrical channel, the concave mirror shaped reflector because of its larger dimensions is simpler to fabricate.

In particular, the counter mirror has a through hole for the beam to enter the reflector and leave the reflector.

In a further advantageous embodiment, the diameter of the concave shaped mirror d2 is equal to the diameter D of the channel (d2 = D). Such conditions apply in particular, if the concave shaped mirror forms a concave ending of the channel. For such an embodiment, no counter mirror is required. The scattered and unscattered light is reflected. In such an arrangement of the reflector, the light leaves the reflector in another angle than it entered the reflector.

Regarding the adapter module, in a further advantageous embodiment of the device, the adapter is connectable to the optical system by means of a glass fibre. In a particular embodiment, this connection might be designed such that a permanent connection with the glass fibre is provided. In another particular embodiment, the connection might be designed such that the glass fibre is removable and can be fixed to the adapter by means of a detachable fastening element, e.g. a screw mechanism or clamp mechanism.

In a further advantageous embodiment of the invention, an optical filter module is arranged between the optical module and the channel module. Such an optical filter module can receive at least one filter for modifying the light signal. In particular, such optical module is designed to receive at least one filter. In addition, the optical module might be permeable for light, such that scattered and unscattered light can pass the module and an optional filter placed within the module.

In particular, the optical filter module comprises a notch filter. With such a filter, it is possible to reject a certain portion of the light spectrum, while transmitting all other wavelengths. Inserting a notch filter into the light path leads to longer exposure times of the liquid sample, due to the slower saturation of the the signal detector.

In an advantageous embodiment of the invention, the optical system is connected to the adapter by means of an optical fibre. Advantageously, the optical system can be connected to more than one fibre at the time, in particular it can be connected to up to four fibres, wherein each fibre can be connected to another adapter of another inventive device. By such an arrangement, more than one device at the time can be connected to the optical system. Each of the connected devices can be measured by switching the optical signal from fibre to fibre by means of a multiplexer comprised in the optical system. Therefore, multiple measurements in various devices can be performed within short time.

A second aspect of the invention refers to a set for forming the device of the first aspect of the invention comprising at least one channel module, at least one adapter module, at least one reflector module, and at least one optical module according to the previously described embodiments.

In particular, the each module of the set is detachably mountable to each other module of the set. Therefore, the order of the modules can be changed.

A third aspect of the invention refers to a channel module configured for being used in a device according to the first aspect of the invention or to the set according to the second aspect of the invention. The channel module comprises a cylindrical channel which provides an optical path between a first end of the channel module and a second end of the channel module and which provides a fluid connection between an inlet connection and an outlet connection.

In an advantageous embodiment of the invention, the cylindrical channel has the dimensions as described in regard of the first aspect of the invention.

An advantageous embodiment of the channel module is configured for single-use only. This means, the channel module is configured to being inserted in the device only for one measurement.

Advantageously, the channel module is configured for its intended use as channel module in the device as described in the first aspect of the invention. The inlet connection therefore comprises the inlet channel that is separated by the first wall from the channel such that an opening between the first wall and the attachable first glass slide remains. Furthermore, the outlet connection comprises the outlet channel that is separated by the second wall from the channel such that an opening between the second wall and the attachable second glass slide remains.

In particular, for the channel module, the inlet and outlet connection are only named as such for description purposes and can also work vice versa, e.g. inlet connection might be the fluid outlet and outlet connection might be the fluid inlet.

A fourth aspect of the invention refers to a method for analysing a liquid mixture with a device according to the first aspect of the invention. The method comprises the step of pumping a liquid from the inlet connection through the channel to the outlet connection by means of e.g. a pump or a syringe attached to the inlet or outlet connection. Furthermore, the method comprises the step of generating optical signals by means of the optical module that is mounted via an optical fibre to the adapter. In addition, the method comprises the step of directing the optical signals into the channel by means of the optical module. And furthermore comprises the step of reflecting the optical signals at the reflector in a manner that the signals are reflected and sent back through the optical path of the channel module to the adapter module. A further step of the method is to collect the reflected optical signals by means of the optical module in a manner that the reflected optical signals are directed towards the optical module. In addition, the method comprises the step of detecting the optical signals at the optical module for recording the measurements.

A fifth aspect of the invention refers to a use of the device according to the first aspect for online monitoring and controlling of different procedure steps of a bioprocess.

It is understood that the various embodiments, preferences, and method steps as disclosed in the specification may be combined at will, if not otherwise specified or explicitly excluded. Other advantageous embodiments are listed in the dependent claims as well as in the description below.

### Brief Description of the Drawings

The invention will be better understood and objects other than those set forth above will become apparent from the following detailed description thereof. Such description makes reference to the annexed drawings, wherein:
Fig. 1 shows a sectional view of an advantageous embodiment of the device in accordance with the invention;
Fig. 2a shows an advantageous embodiment of a set for forming the device in accordance with the invention;
Fig. 2b shows a further advantageous embodiment of a set for forming the device in accordance with the invention;
Fig. 3a shows a sectional front view (left) and a side view (right) of the details of the advantageous embodiment of a channel module of the set shown in Fig. 2b;
Fig. 3b shows a further advantageous embodiment of a channel module according to the invention;
Fig. 4a shows an advantageous embodiment of a reflector module in accordance with the invention;
Fig. 4b shows a further advantageous embodiment of a reflector module in accordance with the invention;
Fig. 5 shows an advantageous embodiment of a set of a tube and an embodiment of the devicee according to the invention;
Fig. 6 shows a graph according to example 1;
Fig. 7 shows a graph according to example 2;
Fig. 8 shows a graph according to example 3;
Fig. 9 shows a graph according to example 4.

### Modes for Carrying Out the Invention

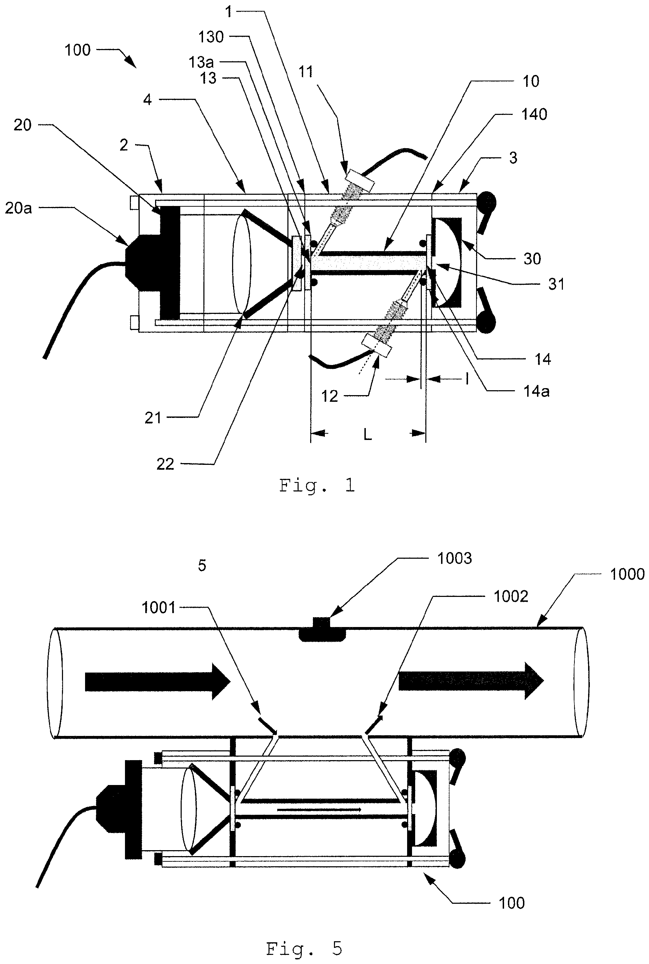

Fig. 1 shows a schematic sectional view of an advantageous embodiment of the device 100 according to the invention. The device comprises a channel module 1, an adapter module 2, a reflector module 3, and an optical module 4. The channel module 1 comprises a cylindrical channel 10 which provides an optical path between a first end 130 of the channel module 1 and a second end 140 of the channel module 1, and which provides a fluid connection between an inlet connection 11 and an outlet connection 12. The adapter module 2 comprises an adapter 20 connectable to an optical system 20a to send optical signals reflected by the reflector module 3 through the optical path of the channel module 1. The optical module 4 is arranged between the adapter module 2 and the channel module 1 for modifying said optical signals. The reflector module 3 comprises a reflector 30 by means of which optical signals received from the adapter module 2 are reflected and returned to the adapter module 2 through the optical path of the channel module 1.

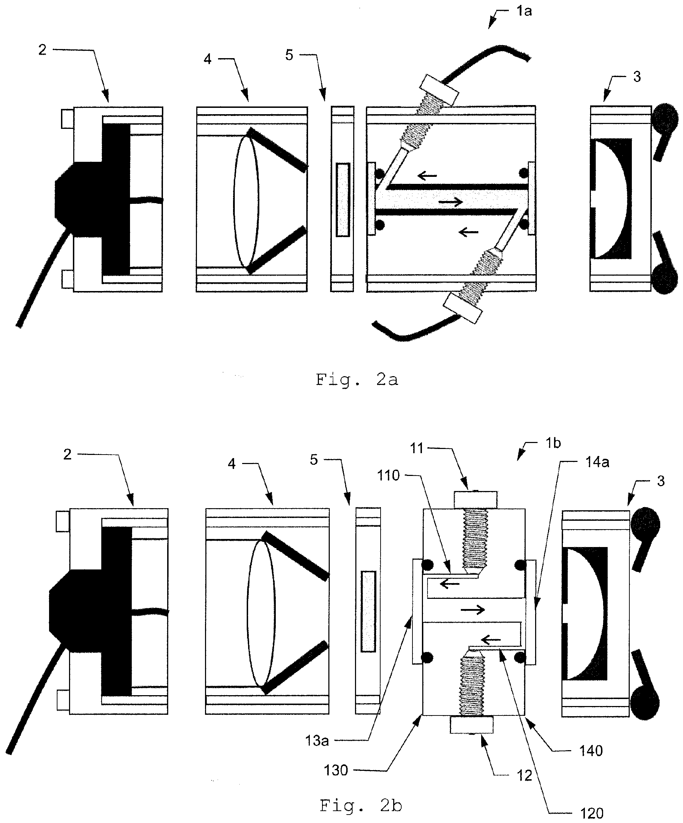

The channel module shown in Fig. 1 is only one advantageous embodiment. It could also be replaced by a further embodiment of the channel module, e.g. the embodiment of the channel module as shown in the set in Fig. 2b.

The individual modules are advantageously detachably mounted to each other as further discussed for another embodiment of the invention in Figure 2.

The advantageous device comprises further a first glass slide 13a and a second glass slide 14a. Both glass slides are advantageously removably attached to the channel device.

The channel 10 in the channel module 1 and/or the reflector in the reflector module might advantageously be coated with a reflective material.

In regard of the adapter module 2, the adapter is advantageously connectable to the optical system by means of a glass fibre.

With such a device 100, a liquid mixture can be analysed. Such analysis would in particular comprise the steps of: pumping a liquid from the inlet connection 11 through the channel 10 to the outlet connection 12 by means of e.g. a pump or a syringe attached to the inlet or outlet connection 11,12; generating optical signals by means of the optical module 20a that is mounted via an optical fibre to the adapter 20; directing the optical signals into the channel 10 by means of the optical module 4; reflecting the optical signals at the reflector 30 in a manner that the signals are reflected and sent back through the optical path of the channel module 1 to the adapter module 3;
collecting the reflected optical signals by means of the optical module 4 in a manner that the reflected optical signals are directed to towards the optical module 20a; detecting the optical signals at the optical module 20a for recording measurements.

Fig. 2a and 2b show a schematic sectional view of an advantageous embodiment of a set for forming the device according to the invention. As shown in the figure, the set advantageously comprises one channel module 1, one adapter module 2, one reflector module, and one optical module.

Advantageously, the set comprises an optical filter 5 module for receiving an optical filter, e.g. a notch filter. The filter module 5 is advantageously arranged between the optical module 4 and the channel module 1, but can further be arranged between the reflector module 3 and the channel module 1 or between the adapter module 2 and the optical module 4.

The individual modules of the set can be mounted to each other advantageously by a detachable mounting mechanism, e.g. by screws, magnets or a similar mechanism. The advantageous order of the modules is as shown in Figure 2: the adapter module 2 is attached to the optical module 4; the optical module 4 is attached to an optical filter module 5 if there is any and if there is none, directly to the channel module 1; the channel module 1 is attached to the reflector module 3.

In particular, the mechanism might be such that the individual modules can be exchanged in their order or such that the order of the modules is fix.

The advantage of having a mechanism that does not allow the exchange of the order of the modules is that the user cannot arrange the modules in the wrong order.

Regarding an advantageous channel module 1, the inlet connection 11 and the outlet connection 12 are arranged on opposite sides of the channel 10. In particular, an axis of the inlet connection 11 and an axis of the outlet connection 12 are radially directing towards the axis of the cylindrical channel 10.

In addition, an advantageous channel module might be designed such that at least a section of the inlet connection 11 and/or the outlet connection 12 is configured to provide a flow direction opposite to the flow direction in the channel 10. The flow direction in the channel module is exemplarily indicated by the arrows to demonstrate this feature. The flow direction could also be in opposite direction.

The embodiment of the channel module 1 in Fig. 2a differs from the embodiment of the channel module 1 in Fig. 2b. Both embodiments 1 have similar as well as distinguishing features.

Both channel modules 1, have a channel 10 that has advantageously a diameter of D ≤ 5 mm, in particular of D ≤ 4 mm, in particular of D ≤ 3 mm. In addition, the channel has advantageously a length L within a range of 0.5 ≤ L ≤ 5 cm, in particular of 0.5 ≤ L ≤ 3 cm, in particular of 0.5 ≤ L ≤ 1 cm.

The inlet and outlet connections 11, 12 are advantageously formed by cylindrical-shaped adapter connections.

The embodiment of the channel module 1 in Fig. 2a differs from the embodiment of the channel module 1 in Fig. 2b in that an angle between an axis of the inlet respectively outlet connections 11, 12 and the axis of the channel 10 is within a range of 20° to 60°.

The embodiment of the channel module 1 in Fig. 2b differs from the embodiment of the channel module 1 in Fig. 2a in that the inlet and outlet connections 11, 12 comprise each an inlet respectively outlet channel 110, 120 that is each separated by a first respectively second wall from the channel 10, wherein an opening forms between the first wall and the first glass slide respectively between the second wall and the second glass slide to provide a fluid connection between the inlet respectively outlet channel 110, 120 and cylindrical channel 10.

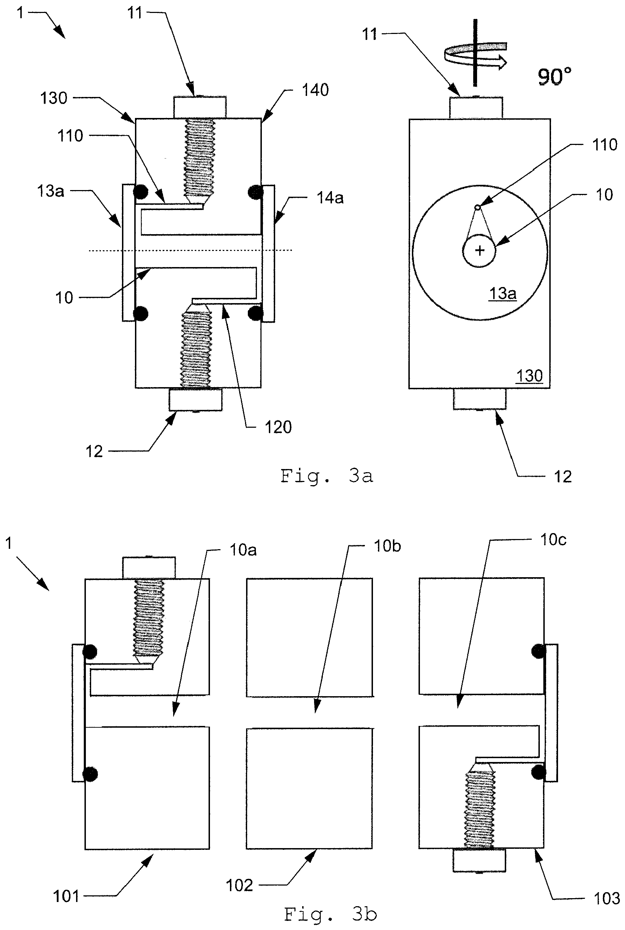

Fig. 3a shows a detailed view of the channel module 1 of the embodiment of the set in Fig. 2b in a sectional front view (left image) and in a side view (right image). Such embodiment of the channel module 1 could be combined with any of the other modules to build a device according to the invention or to build a set for forming the device.

The cylindrical inlet channel 110 and outlet channel 120 form sections that have an axis parallel to the axis of the cylindrical channel 10. The channel 10 and the inlet channel 110 open to the side of the first end 130 of the channel module 1. The channel 10 and the outlet channel 120 open to the side of the second end 140 of the channel module 1.

The respective opening that forms between the respective first or second glass slide 13a, 14a and the respective first or second wall has the form of two circles linked with their tangents. This is visible in the side view. In particular, the side view also shows the circular form of the glass slide 13a that attaches to the first end 130 of the channel device.

In a further embodiment, the slide 13a might be only partially made of glass or sapphire glass in the circular area, where the optical signal passes the glass slide 13a.

The circular form of the slide 13a has the advantage, that the alignment of the slide 13a in radial direction is not critical.

The same features might apply further to the second slide 14a that is attached to the second end 140 of the channel module 1.

Fig. 3b shows a further advantageous embodiment of the channel module 1. This embodiment is in particular characterized in that it comprises further modules itself. The channel module 1 comprises a first channel module 101, a second channel module 102 and a third channel module 103. The modules are detachably mountable to each other. The cylindrical channel 10 continues through all three modules. Each of the respective channel modules 101, 102, 103 comprises a cylindrical channel section 10a, 10b, 10c that form the channel 10 if the modules 101, 102, 103 are attached respectively mounted together.

The first channel module 101 comprises the inlet connection 11 and the inlet channel 110. In addition, the first slide 13a is attachable to the first channel module 101, e.g. by screws or magnets. In addition, the first channel module 101 comprises a section 10a of the channel 10.

The second channel module 102 comprises a section 10b of the channel 10.

The third channel module 103 comprises the outlet connection 12 and the outlet channel 120. In addition, the second slide 13b is attachable to the third channel module 103, e.g. by screws or magnets. In addition, the third channel module 103 comprises a section 10c of the channel 10.

Such advantageous embodiment of the channel module 1 allows to vary the channel length by only varying the length of the second channel module 102. Therefore, the length can be varied very easily.

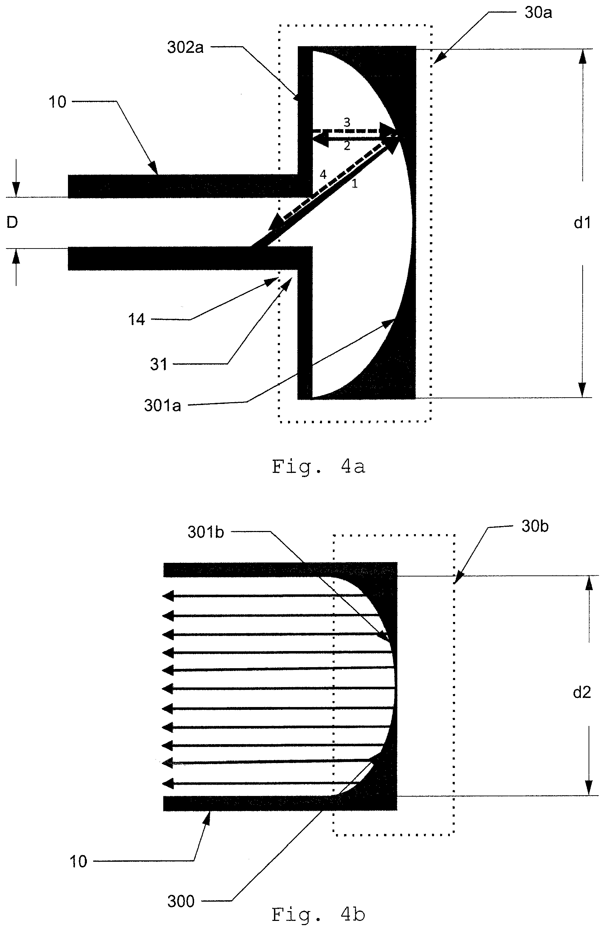

Fig. 4a shows a sectional view of a first advantageous embodiment of the reflector module 3. The reflector module 3 comprises a reflector 30a with a concave shaped mirror 301a and a counter mirror 302a. The concave mirror 301a has a diameter d1 that is larger than the diameter D of the cylindrical channel 10. The concave mirror 301a and the counter mirror 302b are formed and arranged in such a configuration relatively to each other that every light beam entering the reflector module is reflected by the concave shaped mirror 301a such that it hits the counter mirror 302a vertically to its surface. In particular, the arrangement of the concave mirror 301a and the counter mirror 302a is such that a light beam 1 entering the reflector 30a is reflected at the concave shaped mirror 301a and continues as light beam 2, such that it hits the counter mirror 302a surface vertically to the counter mirror 302a surface, where it is reflected back in the same direction and continues as light beam 3, vertically to the counter mirror 302a surface, and hits the concave shaped mirror 301a again before it leaves the reflector 30a again as light beam 4 in the same angle as it entered the reflector 30a.

This particular embodiment of the reflector 30a has a volume that has the shape of a mushroom. It is formed by attaching the concave shaped mirror 301a to the counter mirror 302a, wherein the counter mirror 302a comprises a through hole for the light beam to enter/leave the reflector. The trough hole is arranged in the center of the concave shaped mirror 301a.

Fig. 4b shows a further embodiment of the reflector module 3. The further module 3 comprises a further embodiment of the reflector 30b. The diameter d2 of the concave shaped mirror 301b is equal to the diameter D of the channel 10. In this embodiment, a light beam that is reflected by the concave shaped mirror 301b does not leave the reflector in the same angle as it entered the reflector. In addition, no counter mirror is required compared to the embodiment of Fig. 4a.

Both embodiments of the reflector comprised within the respective embodiments of the reflector module 3 can be combined with all other modules of the device. In particular, both embodiments of the channel module 1 as shown in Fig. 2 are compatible with each of the respective reflector modules 3.

Fig. 5 shows an embodiment of a set of a tube 1000 and an embodiment of the device 100 according to the invention. The device 100 is coupleable to the tube 1000 by means of the inlet connection 1001 and the outlet connection 1002. Therefore, the inlet connection 1001 and the outlet connection 1002 are arranged on the same side of the channel 10, in particular on the side of the channel 10 that is facing against the tube 1000. The tube can further comprise a flow sensor 1003 for detection the flow velocity. By measuring the flow velocity in the channel and detecting a specific component in the channel 10 of the device 100, the concentration of the respective component can be calculated. Such set of a tube 1000 and an embodiment of the device might be used for online monitoring and controlling of different procedure steps of a bioprocess within the tube.

### Examples and Experiments

### Tools used for measuring the examples:

- Optical system:
   - RamanRXN2 multichannel analyzer (Kaiser Optical Systems): Laser wavelength: 785 nm; Resolution: 4 cm-1; Spectral Range: 150 - 3425 cm-1; Cooled charged-coupled device detector; 4 channel sequential, probe selectable;
   - Non-contact objective; NCO-0.4- NIR (Kaiser Optical Systems)
- The adapter module is connected to the optical system with a fiber optical cable (standard version included in RamanRXN2 analyzer)
- If a notch filter is used in the experiments, it is a Ø1" Notch Filter, CWL = 1064 nm, FWHM = 44 nm Thorlabs) ;
- The reflector is a concave mirror (material= gold-coated; diameter= 1.27 cm; focal length= 9.5 mm; Thorlabs Inc, Newton, NJ))
- Inlet and outlet connections comprise:
   - inlet and outlet tubings: polyetheretherketon chromatography capillary (0.762 mm inner diameter, 1,588 mm) (Upchurch),and
   - inlet and outlet fittings: PEEK Fingertight Fitting (for 1.588 mm tubings) (Upchurch)

### Examples:

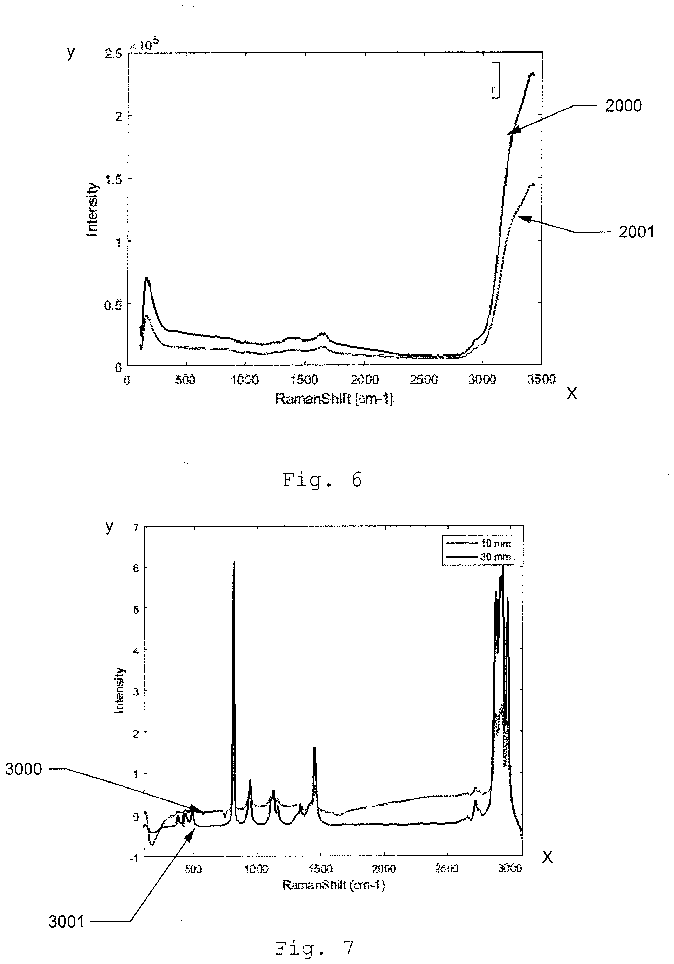

In the following examples, the respective diagrams in Fig. 6, 7 and 8 refer to the RamanShift (cm-1) on the x-axis and to the intensity on the y-axis.

All examples were performed with the embodiment of the channel module as shown in Fig. 3a. In examples 1, 3 and 4, the channel length L was L = 20mm. In example 2, the channel length was modified as described.

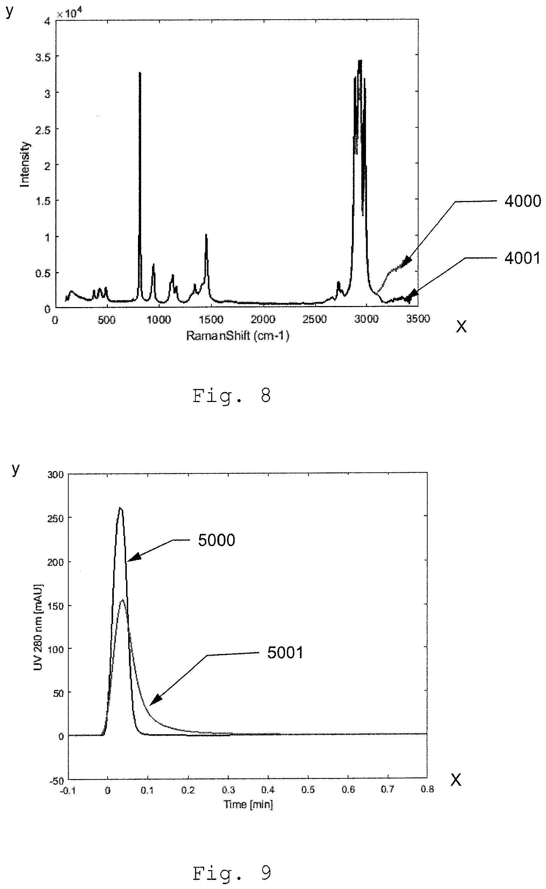

All examples were performed with a reflector module according to the reflector module as shown in Fig. 2a and 2b, wherein the reflector comprises the concave shaped mirror and a counter mirror, wherein the concave shaped mirror has a diameter (d1) that is larger than the diameter (D) of the cylindrical channel, and wherein the concave shaped mirror and the counter mirror are formed and arranged relatively to each other in a manner that every light beam entering the reflector module is reflected by the concave shaped mirror such that it hits the counter mirror vertically to its surface.
Example 1: Fig. 6 shows measurements on a sample solution with and without the reflector or the reflector module respectively. In Figure 6 two Raman spectra of a monoclonal antibody solution, measured with (reference 2000) and without (reference 2001) a reflector of a reflector module, are illustrated. For the measurements without the reflector, a black wall was installed at the second end of the channel. The signals from the measurements without reflector module origin from the reflection of the optical signals within the channel only. The exposure lengths were in both cases 30 seconds, reaching a pixel fill of 42 % without a reflector and 77 % with a reflector. It becomes clear that the intensity over the whole spectra is significantly increased by the reflector, proofing its high importance in signal enhancement.
Example 2: As shown in Fig. 7, measurements with the device were performed, with varying the channel length of the channel of the channel module. Varying the channel length can be done by exchanging the channel module with the respective channel module with the respective length. In Figure 6 two Raman spectra, measured with two different channel modules (reference 3000: 10 mm channel length; reference 3001: 30 mm channel length) are illustrated. The exposure lengths were adjusted to 50 % pixel fill and resulted in 20 seconds for the 10 mm channel and 1 second for the 30 mm channel. Before measuring a 70% isopropyl alcohol solution, a water spectra was acquired, which was subtracted from the isopropyl alcohol spectra to remove background noise. Additionally, the spectra were standard normal variate (SNV) pretreated to enable the comparison. It becomes obvious that the peaks around 800 to 1500 cm-1 are more significant and distinct in the 30 mm channel module, although the measurement time is twenty times smaller. The example therefore shows that if the cylindrical channel length of the channel module is increased, this results in enhanced sensitivity of the measurement setup and therefore more significant measurement results.
Example 3: As shown in Fig. 8, the influence of the notch filter module on the spectra is measured. Two Raman spectra, measured with a notch-filter (reference 4001) and without (reference: 4000) a notch-filter (CWL= 1064 nm; FWHM= 44 nm) are illustrated. The measurements of 70% isopropyl alcohol were acquired in a 20 mm channel module with an exposure lengths of 1 second. The spectra vary only in the range between 3100 and 3425 cm⁻¹ (∼1038 nm to 1074 nm). This proofs that certain regions of the spectra can be blocked by implementing a notch filter, while other regions stay unaffected. This has the advantage to reduce the detector saturation and focus on spectral ranges with relevant information.
Example 4: With reference to Fig. 9, the influence of the reduced dead volume of the flow cell on chromatographic separation is measured. In Fig. 9, the x-axis refers to the time and the y-axis to UV 280nm[mAU]. In Figure 9, two chromatograms of pulse injection experiments with (reference 5000) and without (reference 5001) a flow cell are illustrated. The flow rate were in both cases 2 mL/min and 5 µg monoclonal antibody were injected using a high pressure liquid chromatography system detecting the absorption at 280 nm. The system did not include a chromatography column. The flow cell chromatogram was x-shifted by -0.06 min to correct the increased dead volume, enabling a better comparison of the curve shapes. The curve without a flow cell shows a higher and more distinct peak and no tailing compared to the curve with flow cell. However, the peak shape of the flow cell is still sufficient for chromatographic separations, which proofs the optimal design of the flow path in the cell and minimization of dead zones. Furthermore, these elution curves were acquired with a 20 mm channel module. In cases where increased chromatographic separations are important, a 10 mm channel module could be used to further improve chromatographic separations.

## Claims

1. A device (100), in particular a Raman analysing system, comprising
- a channel module (1),
- an adapter module (2),
- a reflector module (3),
- an optical module (4)
wherein the at least one channel module (1) comprises a cylindrical channel (10) which provides an optical path between a first end (130) of the channel module (1) and a second end (140) of the channel module (1), and which provides a fluid connection between an inlet connection (11) and an outlet connection (12),
wherein the adapter module (2) comprises an adapter (20) connectable to an optical system (20a) to send optical signals trough the optical path of the channel module (1) to the reflector module (3) and to receive optical signals reflectable by the reflector module (3) through the optical path of the channel module (1),
wherein the optical module (4) is arranged between the adapter module (2) and the channel module (1) for modifying said optical signals,
wherein the reflector module (3) comprises a reflector (30) by means of which optical signals received from the adapter module (2) are reflectable and returnable to the adapter module (2) through the optical path of the channel module (1).

2. The device (100) according to claim 1, wherein the adapter module (2) and/or the optical module (4) are detachably mounted to the first end (130) of the channel module (1) and the reflector module (3) is detachably mounted to the second end (140) of the channel module (1).

3. The device (100) according to claim 1 or claim 2 wherein the channel (10) has a diameter D of D ≤ 5 mm, in particular of D ≤ 4 mm, in particular of D ≤ 3 mm.

4. The device (100) according to any one of the preceding claims, wherein the length (L) of the channel (10) from the first end (130) to the second end (140) is within a range of 0.5 ≤ L ≤ 5 cm, in particular of 0.5 ≤ L ≤ 3 cm, in particular of 0.5 ≤ L ≤ 1 cm.

5. The device (100) according to any one of the preceding claims, comprising
a first slide (13a) removably attached to the first end (130) of the channel module (1) configured to fluidically close the channel (10) at the first end (130), and
a second slide (14a) removably attached to the second end (140) of the channel module (1) configured to fluidically close the channel (10) at the second end (140).
in particular, wherein the first and/or the second slide (13a, 14a) is a glass slide, in particular wherein the first and/or the second slide (13a, 14a) comprises sapphire glass.

6. The device (100) according to claim 5, wherein the inlet connection (11) comprises an inlet channel (110) that is separated by a first wall from the channel (10), wherein an opening forms between the first wall and the first glass slide (13a) to provide a fluid connection between the inlet channel and the channel (10),
wherein the outlet connection (12) comprises an outlet channel (120) that is separated by a second wall from the channel (10), wherein an opening forms between the second wall and the second glass slide (14a) to provide a flow path between the second wall and the second glass slide (14a),
in particular, wherein an axis of at least a section of the inlet channel (110) and/or an axis of at least a section of the outlet channel (120) are parallel to the axis of the channel (10).

7. The device (100) according to any one of the preceding claims 1 to 5, wherein the inlet connection (11) and the outlet connection (12) are formed by cylindrical-shaped adapter connections, wherein an angle between an axis of each adapter connection and an axis of the channel (10) is within a range of 20° to 60°.

8. The device (100) according to any of the preceding claims, wherein the reflector (30) comprises a concave shaped mirror.

9. The device (100) according to claim 8, wherein the reflector (30a) comprises the concave shaped mirror (301a) and a counter mirror (302a),
wherein the concave shaped mirror (301a) has a diameter (d1) that is larger than the diameter (D) of the cylindrical channel (10), and
wherein the concave shaped mirror (301a) and the counter mirror (302a) are formed and arranged relatively to each other in a manner that every light beam entering the reflector module is reflected by the concave shaped mirror (301a) such that it hits the counter mirror (302a) vertically to its surface.

10. The device (100) according to claim 8, wherein a diameter (d2) of the concave shaped mirror (30b) is equal to the diameter (D) of the channel (10), in particular wherein the concave shaped mirror (30b) forms a concave ending of the channel (10).

11. The device (100) according to any one of the preceding claims comprising an optical filter module (5), wherein the optical filter module is arranged between the optical module (4) and the channel module (2), in particular, wherein the optical filter module (5) comprises a notch filter.

12. A set for forming the device (100) according to the preceding claims, comprising
- at least one channel module (1),
- at least one adapter module (2),
- at least one reflector module (3), and
- at least one optical module (4).

13. A channel module (2) configured to being used in a device according to claims 1 to 11 or in a set according to claim 12 comprising cylindrical channel (10) which provides an optical path between a first end (130) of the channel module (1) and a second end (140) of the channel module (1) and which provides a fluid connection between an inlet connection (11) and an outlet connection (12).

14. A method for analysing a liquid mixture with a device according to any one of claims 1 to 11 comprising the steps of
- pumping a liquid from the inlet connection (11) through the channel (10) to the outlet connection (12) by means of a pump attached to the inlet or outlet connection (11, 12),
- generating optical signals by means of the optical module (20a) that is mounted via an optical fibre to the adapter (20),
- directing the optical signals into the channel (10) by means of the optical module (4),
- reflecting the optical signals at the reflector (30) in a manner that the signals are reflected and sent back through the optical path of the channel module (1) to the adapter module (3).
- collecting the reflected optical signals by means of the optical module (4) in a manner that the reflected optical signals are directed to towards the optical module (20a), and
- detecting the optical signals at the optical module (20a) for recording measurements.

15. Use of a device according to claims 1 to 11 for online monitoring and controlling of different procedure steps of a bioprocess.
